# EUROPEAN PATENT APPLICATION

(11) **EP 2 613 460 A1**
(43) Date of publication of application: **10.07.2013**
(21) Application number: 12197530.4
(22) Date of filing: 17.12.2012
(51) Int. Cl.: H04B 10/2569, H04B 10/69, H04B 10/548

(54) **Orthogonal frequency division multiplexing method with differential phase shift compensation**

(30) Priority: 30.12.2011 EP 11196238
(71) Applicant: Nokia Siemens Networks Oy, 02610 Espoo (FI)
(72) Inventor: Jansen, Sander, 81379 Munich (DE); Van Den Borne, Dirk, 81379 München (DE)

(57) **Abstract**

Two RF-pilots are inserted in a guard space of an OFDM POLMUX signal. The optical carriers of the RF-pilots are separated by a frequency difference of about 100 MHz or de-correlated. At the receiver, two phase correction signals are derived from the RF-pilots and the phase noise of the orthogonal OFDM signals are corrected separately.

## Description

### FIELD OF THE INVENTION

The invention relates to an optical communication system and to a method of processing data for optical network. In particular, the invention relates to an Polarisation DiversityOrthogonal Frequency-Division Multiplexing (POLMUX OFDM) scheme with differential phase shift compensation.

### BACKGROUND OF THE INVENTION

Optical fiber communication is continuously experiencing the pressure of fast growing data traffic. To target the threatening capacity crunch, the communications industry is forced to upgrade and extend the existing networks. A promising enhancement possibility is the use of advanced modulation formats.

Whereas conventional optical transmission systems employ binary signaling, advanced systems rely upon high-order constellations and Polarization Division Multiplexing (PDM). These techniques improve the spectral efficiency thereby supporting the transmission of higher data rates within the same bandwidth occupied by traditional On-Off Keying (OOK) channels.

Single-carrier and Orthogonal Frequency-Division Multiplexing (OFDM) systems are well known conventional techniques.

In particular, OFDM has been proposed for fiber-optic communication systems and has found many potential applications, varying from the access to (ultra) long-haul networks. OFDM offers many advantages that make it interesting for the use of fiber-optic applications such as negligible linear crosstalk, easier scalability to higher order modulation formats, etc.

One of the main challenges with OFDM is to compensate for phase noise. In fiber-optic transmission systems phase noise originates from noise from the transmit laser and local oscillator. In addition, phase noise may caused by nonlinear interactions of WDM channels in the transmission fiber. The phase noise can be divided into common phase noise (phase noise that is equal over both polarizations) and differential phase noise (phase noise that is different for both polarizations).

Cited from the prior art is S.L. Jansen, I. Morita, T.C.W. Schenk, N. Takeda and H. Tanaka, "Coherent Optical 25.8-Gb/s OFDM Transmission over 4,160-km SSMF", Journal of Lightwave Technology, vol. 26, pp. 6-15, 2008 which is incorporated by reference. Implementations of a RF-pilot aided phase noise compensation scheme are described. With this technique phase noise compensation is realized by placing an RF-pilot tone in the middle of an OFDM band at the transmitter the basic idea is: When an RF-pilot is inserted at the transmitter this pilot is distorted in the same way as the OFDM signal. Therefore the RF-pilot can be used at the receiver to revert any phase distortions from the OFDM signal. Subsequently the RF-pilot is separated from the received OFDM signal, a complex conjugation to the RF-pilot is applied to achieve a correction signal, and the OFDM signal is multiplied with the correction signal.

More details are described in former publications by S. L. Jansen which are also incorporated by reference.

S. L. Jansen, I. Morita, N. Takeda, and H. Tanaka, "20-Gb/s OFDM transmission over 4160-km SSMF enabled by RF-pilot tone phase noise compensation," in Proc. Opt. Fiber Commun. Conf., Anaheim, CA, 2007, Paper PDP 15.

S. L. Jansen, I. Morita, N. Takeda, and H. Tanaka, "Preemphasis and RF-pilot tone phase noise compensation for coherent OFDM transmission systems," in Proc. IEEE/LEOS Summer Top. Meet., 2007, Invited, MA1.2.

S. Randel, S. Adhikari, S.L. Jansen analyse and compare in document "Analysis of RF-Pilot-based Phase Noise Compensation for Coherent Optical OFDM Systems," IEEE Photonics Technology Letters, vol. 22, pp. 1288-1290, 2008, 2010 the RF-pilot-based phase noise compensation scheme to conventional common-phase error compensation.

The transmission fiber used in conventional fiber-optic transmission systems is nonlinear. This fiber impairs the quality of the signal through nonlinear effects such as SPM, XPM, XPolM etc. These nonlinear effects cause differential phase distortions that can cause burst-like BER errors.

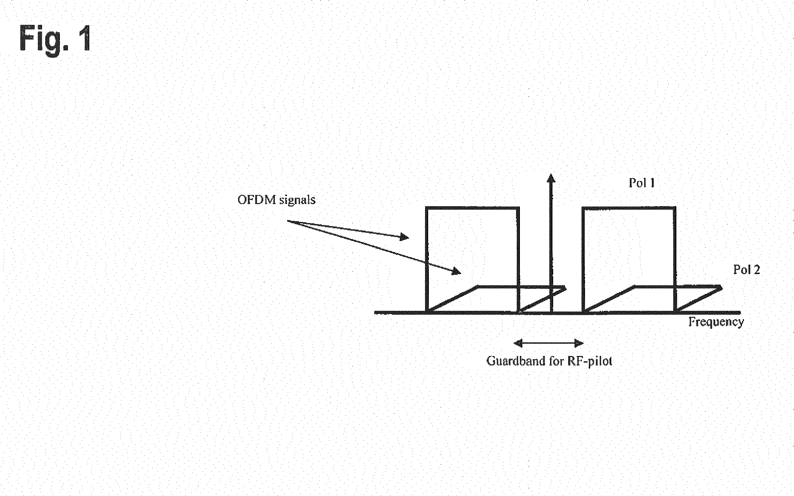

**Fig.1** is a schematic representation of the optical spectrum of an OFDM signal with a conventional RFP-based phase noise compensation. In the middle of the OFDM spectrum a small gap is present where an RF-pilot is placed at the transmitter. This RF-pilot monitors any phase distortions that occur along the transmission line. At the receiver the RF-pilot is separated from the OFDM signal using an analogue or digital optical filter and used to remove all phase distortions from the OFDM signal. The conventional RFP method may be effective for the compensation of common phase errors. However, polarization dependent phase distortions are not compensated since the RF-pilot tone is polarized and can only measure phase distortions in its own polarization.

The problem to be solved is to overcome the disadvantages stated above and in particular to provide a solution which allows compensation of common phase as well as differential phase distortions.

### BRIEF DESCRIPTION OF THE DRAWINGS

The invention is explained by way of example in more detail below with the aid of the attached drawings.
Fig. 1 is a schematic representation of the optical spectrum of an OFDM signal with RFP-based phase noise compensation.
Fig. 2 is a schematic representation of differential shift compensation RFP according to an embodiment of the invention.
Fig. 3 is a schematic representation of the differential phase shift compensation RFP with spectral RF-tone separation according to an embodiment of the invention.
Fig. 4 is a schematic representation of differential phase shift compensation RFP with decorrelation of the RF-tones according to an embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

In order to allow compensation of common phase as well as differential phase distortions the conventional RFP method is modified to monitor phase noise distortions on both polarizations and thereby both common phase noise distortions and differential phase noise distortions can be compensated for.

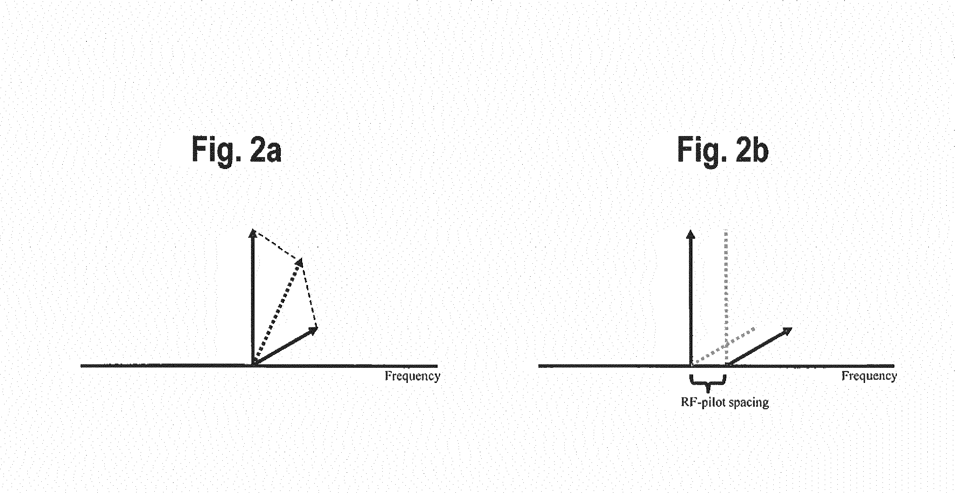

In order to monitor phase distortions on both polarizations two RF pilots are required instead of one. However, the two coherent RF pilots (pilots generated by the same source) cannot be placed on the exact same frequency. This is illustrated in **Fig. 2****.** Here it can be seen that when two unmodulated and coherent subcarriers are placed at the same frequency this will merely result in a phase rotation as this is in essence the projectory of the two pilot tones. As a result, still only the phase distortions on a single polarization are measured making not possible to compensate for differential phase noise.

A first embodiment of the invention includes spectral separation of the RF-pilot tones. The concept is shown in the configuration shown on the right of **Fig. 2****.** In this configuration a small spectral spacing is introduced to insert two spectrally separated RF-pilots which are generated by the same laser. A realistic spacing for such a configuration is in the order of ∼100MHz. As illustrated in Fig 2 the different frequencies of the two spectrally independent RF carriers are realized by spectrally shifting one of the carriers. An efficient implementation to realize such a shift is by using an acoustic optical modulator (AOM) or by adequately coding the pilot as an RF frequency in the digital domain.

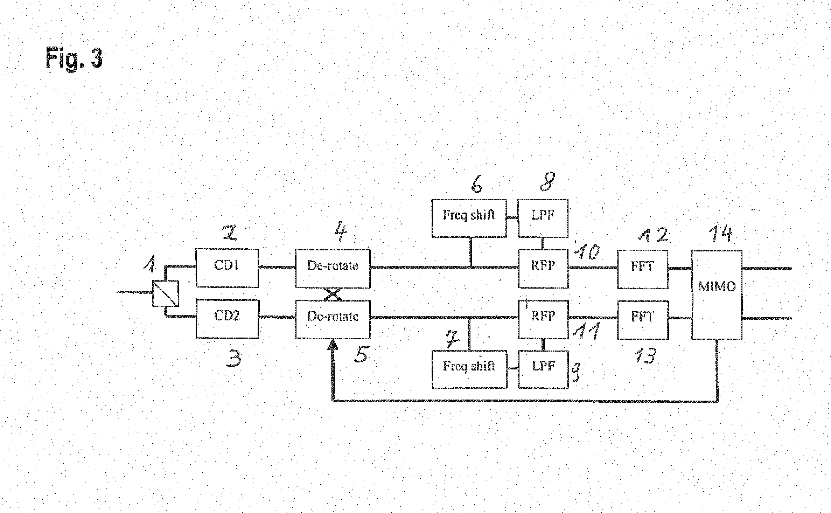

**Fig. 3** shows a possible implementation of the receiver. First both polarizations are split by a polarization beam splitter 1 in a random fashion and converted to the electrical domain with a first and a second coherent detector CD1 / 2 and CD2 /3 respectively. After detection, the polarization is derotated by a first and a second de-rotator 5 for both signal paths so that the RF-pilots are aligned with the two polarization plans or aligned by another method. Phase noise compensation RFP is performed next where for each signal path the intermediate frequency of the RF pilot is corrected to DC - meaning frequency null - using a first and second frequency shift block 6 and 7 respectively. The gained shifted signals are phase error signal. These are low pass filtered and converted into separate phase correction signals for each polarization (OFDM signal with this polarization) compensating the phase shift errors. The phase correction signals are fed to a first and a second phase correction unit 10 and 11 for correcting the phases of the received OFDM signals of both polarizations independently. The phase correction units perform a common phase correction (by phase modulation) for all OFDM signals transmitted with the same polarization. After RFP a conventional OFDM POLMUX receiver is used with FFT (fast Fourier transformation) and MIMO (multiple input - multiple output) processing. In order to simplify the de-rotation block, the average coefficients of the MIMO block can be used to monitor polarization changes and update de-rotation coefficients.

The main advantage of the proposed method is that differential phase distortions are monitored and can be compensated for. This significantly increases the tolerance of POLMUX OFDM with respect to differential phase distortions caused by nonlinear effects. As a result, a POLMUX OFDM transponder with differential phase shift compensation is more suitable for long-haul optical transmission systems, in particular when mixed with modulation formats that generate significant inter-channel nonlinear transmission impairments (for example 10G on-off keying).

A second embodiment of the invention includes the decorrelation of the RF-pilots: By de-correlating the two pilot tones can be polarization multiplexed on the same frequency. This will allow tracking and compensating for the phase noise on each polarization individually.

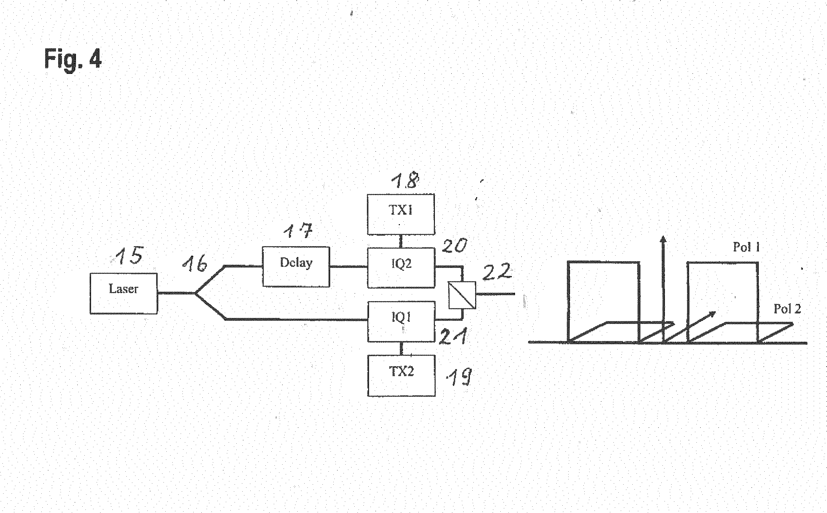

A possible transmitter realization and the optical spectrum of the output is shown in **Fig. 4****.** At the transmitter the output of a TX laser 15 is split by a polarization beam splitter 16 into two arms carrying orthogonal polarized carriers. One of the two arms comprises a delay 17 delaying one signal in order to decorrelate the phase noise of the two laser signals. Subsequently the OFDM signal is modulated on both polarizations using IQ modulators 20 and 21 controlled by modulation signal sources 18 and 19, and combined by a polarization beam splitter 22. The receiver in this configuration is in essence the same as in the embodiment depicted in Fig. 4. It would be possible as well to remove the "de-rotate" block, but this might reduce the performance of the equalizer as in this case the phase noise of the two RF-pilots is mixed.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- AOM: Acoustic Optical Modulator
- CD: Coherent detection
- MIMO: Multiple-input, multiple-output
- OFDM: Orthogonal frequency division multiplexing
- OOK: On-Off Keying
- POLMUX: Polarization multiplexing
- RFP: RF based phase noise compensation
- SPM: self-phase modulation
- WDM: wavelength division multiplex
- XPM: cross phase modulation
- XPolM: cross polarization modulation
- TX1, TX2: modulation signal sources

### Reference Signs

- 1: polarization beam splitter
- 2: first coherent detector
- 3: second coherent detector
- 4: first de-rotator
- 5: second de-rotator
- 6: first frequency shift block
- 7: second frequency shift block
- 8: first low-pass filter
- 9: second low-pass filter
- 10: first phase correction unit
- 11: second phase correction unit
- 12: first fast Fourier transformation unit
- 13: second fast Fourier transformation unit
- 14: receiver
- 15: laser
- 16: polarization beam splitter
- 17: delay first transmitter unit
- 18: first transmitter unit second transmitter unit
- 19: second transmitter unit
- 20: first optical IQ modulator
- 21: second optical IQ modulator
- 22: combiner

## Claims

1. A method for differential phase shift noise compensation of a POLMUX OFDM (Polarisation Multiplex - Orthogonal Frequency Division Multiplex) signal, comprising the steps of
- at a transmitter, generating two independent RF-pilots with optical carriers frequencies derived from a common optical source;
- inserting these RF-pilots in a guard band of the POLMUX OFDM signal;
- at a receiver, separating the RF-pilots and converting the RF-pilots into associated phase correction signals; and
- processing phase noise compensation by separate phase shift correction of both orthogonal polarized OFDM signals with said associated phase correction signals.

2. The method according claim 1, wherein
the two RF-pilots have shifted optical carriers frequencies.

3. The method according claim 2, wherein
a shifted optical carrier frequency is derived by using an acoustic optical modulator or by coding the pilot frequency in the digital domain.

4. The method according claim 2, wherein
the RF-pilots have a spacing about 100 MHz.

5. The method according claim 1, wherein
one of the RF-pilots is de-correlated by an optical delay.

6. The method according to one of the claims 1 - 5, comprising the step of shifting the pilot carrier frequency to zero before deriving the phase correction signal.

7. The method according to one of the claims 1 - 6, comprising the step of
- at the receiver, deriving data signals by Fast Fourier processing of the phase noise compensated OFDM signals.

8. An optical communication system arranged to perform the features according to one of the claims 1 - 7.

9. An optical communication system with a POLMUX OFDM receiver according to claim 8, comprising
- a first and a second phase noise correction circuit (6 ,8 , 10; 7, 9, 11), each including a frequency shift block (6, 7), a low-pass filter (8, 9), and
- a phase correction unit (10, 11) receiving an OFDM signal and outputting a phase shift corrected OFDM signal.
